(19) Europäisches Patentamt
European Patent Office
Office européen des brevets

(11) Veröffentlichungsnummer: **0 017 831**
**A1**

(12) # EUROPÄISCHE PATENTANMELDUNG

(21) Anmeldenummer: **80101699.9**

(22) Anmeldetag: **29.03.80**

(51) Int. Cl.³: **C 09 B 43/16,** D 21 H 1/46, D 21 H 3/80

(30) Priorität: **06.04.79 DE 2913878**

(43) Veröffentlichungstag der Anmeldung: **29.10.80 Patentblatt 80/22**

(84) Benannte Vertragsstaaten: **AT BE CH DE FR GB IT LU NL SE**

(71) Anmelder: **BASF Aktiengesellschaft, Carl-Bosch-Strasse 38, D-6700 Ludwigshafen (DE)**

(72) Erfinder: **Hansen, Guenter, Dr., Mundenheimer Strasse 168, D-6700 Ludwigshafen (DE)**

(54) **Azo-triazin-azofarbstoffe und deren Verwendung zum Färben von Papier.**

(57) Die Erfindung betrifft Verbindungen, die in Form der freien Säuren der allgemeinen Formel I

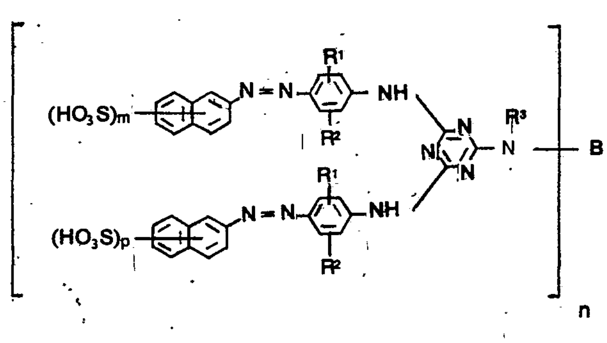

entsprechen, in der
m die Zahlen 1, 2 oder 3,
p die Zahlen 1, 2 oder 3,
n die Zahlen 1 oder 2, die Reste
$R^1$ unabhängig voneinander Wasserstoff, Chlor, Alkyl, Alkoxy, Alkanoylamino oder Aminocarbonylamino, die Reste
$R^2$ unabhängig voneinander Wasserstoff, Alkyl oder Alkoxy,
$R^3$ Wasserstoff oder gegebenenfalls substituiertes Alkyl und
B für n = 1 gegebenenfalls substituiertes Aminoalkyl oder gegebenenfalls substituiertes Amino und für n = 2 ein Brückenglied und
$R^3$ und B für n = 1 zusammen mit dem Stickstoff einen Heterocyclus bedeuten.

Die erfindungsgemässen Verbindungen eignen sich insbesondere zum Färben von Papierstoffen.

EP 0 017 831 A1

0017831

BASF Aktiengesellschaft

O.Z. 0050/033777

BEZEICHNUNG GEÄNDERT
siehe Titelseite

Organische Verbindungen

Die Erfindung betrifft Verbindungen, die in Form der freien Säuren der allgemeinen Formel I

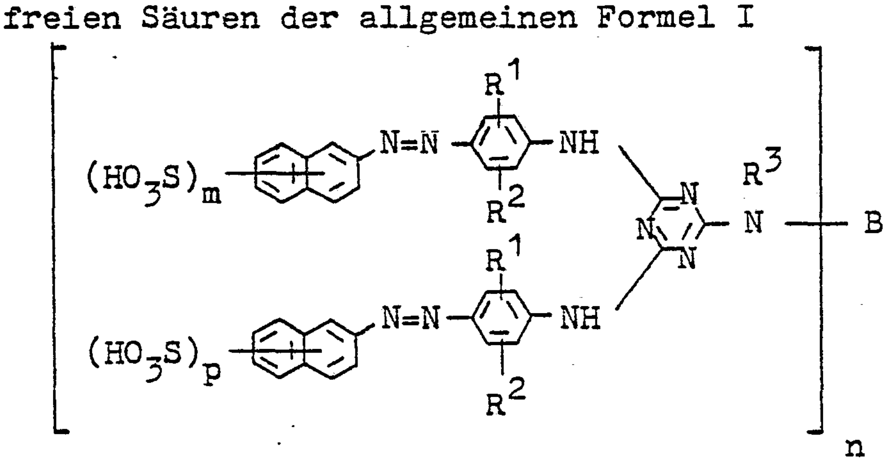

I

entsprechen, in der

m die Zahlen 1, 2 oder 3,

p die Zahlen 1, 2 oder 3,

n die Zahlen 1 oder 2, die Reste

$R^1$ unabhängig voneinander Wasserstoff, Chlor, Alkyl, Alkoxy, Alkanoylamino oder Aminocarbonylamino, die Reste

$R^2$ unabhängig voneinander Wasserstoff, Alkyl oder Alkoxy,

$R^3$ Wasserstoff oder gegebenenfalls substituiertes Alkyl und

B für n = 1 gegebenenfalls substituiertes Aminoalkyl oder gegebenenfalls substituiertes Amino und für n = 2 ein Brückenglied und

$R^3$ und B

für n = 1 zusammen mit dem Stickstoff einen Heterocyclus bedeuten.

Gegebenenfalls substituierte Alkylreste für $R^3$ sind beispielsweise:

$CH_3$, $C_2H_5$, n- oder i-$C_3H_7$, n- oder i-$C_4H_9$, $C_5H_{11}$, $C_6H_{13}$, $C_8H_{17}$,

$CH_2CH\genfrac{}{}{0pt}{}{\diagup C_2H_5}{\diagdown C_4H_9}$, $C_2H_4OH$, $C_2H_4OCH_3$, $C_2H_4OC_2H_5$, $C_2H_4OC_3H_7$, $C_2H_4OC_4H_9$, $CH_2CHOHCH_3$, $CH_2\underset{OCH_3}{\underset{|}{C}H}-CH_3$, $CH_2\underset{OC_2H_5}{\underset{|}{C}H}CH_3$, $CH_2CHOHCH_2Cl$, $CH_2CHOHCH_2OH$, $CH_2\underset{OCH_3}{\underset{|}{C}H}CH_2OCH_3$, $C_2H_4CN$, $C_2H_4COOH$, $C_2H_4COOCH_3$, $C_2H_4COOC_2H_5$, $CH_2C_6H_5$ oder $C_2H_4C_6H_5$ sowie für n = 1 die für B genannten Aminoalkylreste.

Reste $R^1$ und $R^2$ sind neben Wasserstoff im Rahmen der allgemeinen Definition z. B.: Äthyl, Propyl, Butyl, Propoxy, Butoxy, Propionylamino, Butylamino oder $NHCONH_2$ und vorzugsweise Methyl, Methoxy, Äthoxy oder Acetylamino.

Für n = 1 sind für B z. B. Aminoalkylreste, bei denen Amino-, Alkylamino-, Dialkylamino-, Cycloalkylamino-, Aralkylamino- oder Arylaminogruppen an die Alkylreste gebunden sein können, zu nennen, wobei die Alkylreste ihrerseits ein- oder mehrfach durch -O-, -S-, -NH- oder Heterocyclen unterbrochen sein können. Diese Reste B entsprechen vorzugsweise der allgemeinen Formel

$$-(\text{alkylen-X})_q\text{alkylen-N}\genfrac{}{}{0pt}{}{\diagup B^1}{\diagdown B^2}$$

in der

alkylen 2 bis 6 C-Atome hat und

X eine direkte Bindung, -O-, -S-, -NH- oder einen Heterocyclus,

q 1 oder eine Zahl 〉1,

$B^1$ Wasserstoff, $C_1$- bis $C_4$-Alkyl, Cyclohexyl, Benzyl, Phenyläthyl oder Phenyl,

$B^2$ Wasserstoff oder $C_1$- bis $C_4$-Alkyl und

$B^1$ und $B^2$

zusammen mit dem Stickstoff einen heterocyclischen Rest bedeuten. Einzelne Reste dieser Art sind beispielsweise:

$CH_2CH_2NH_2$, $CH_2CH_2CH_2NH_2$, $(CH_2)_2N(CH_3)_2$, $(CH_2)_2N=(C_2H_5)_2$, $(CH_2)_3N(CH_3)_2$, $(CH_2)_3N(C_2H_5)_2$, $(CH_2)_3N(C_3H_7)_2$, $(CH_2)_3N(C_4H_9)_2$, $(CH_2)_3$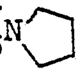,

$-CH_2-CH_2-O-CH_2-CH_2-$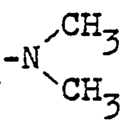, $-CH_2-CH_2-$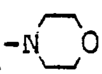 oder

$-CH_2-CH_2-$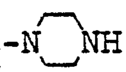.

Gegebenenfalls substituierte Aminoreste für B für den Fall n = 1 sind z. B. $NH_2$, $NHCH_3$, $N(CH_3)_2$, NH-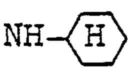, $NH-C_6H_5$ oder $NHC_2H_4CN$.

Gemeinsam von $R^3$ und B und dem Stickstoff gebildete Reste sind gesättigte oder ungesättigte Heterocyclen, die vorzugsweise 5 oder 6 Ringglieder haben. Einzelne Reste sind beispielsweise

$-(CH_2)_4-$, $-(CH_2)_5-$, $-(CH_2)_6-$, $-CH_2CH_2OCH_2CH_2-$,

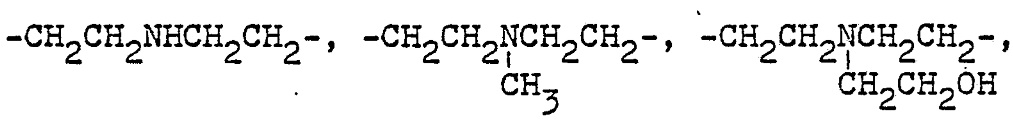

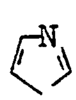 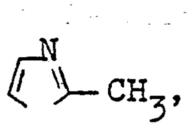, 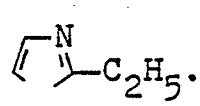.

Für n = 2 ist B ein Brückenglied und entspricht vorzugsweise der Formel

$(\text{-alkylen-X})_r\text{-alkylen-}$,

in der

r die Zahlen 0, 1 oder eine Zahl $>1$ ist und

alkylen und X
die angegebene Bedeutung haben, wobei jedoch für X = NH das Wasserstoffatom durch einen Rest der Formel II

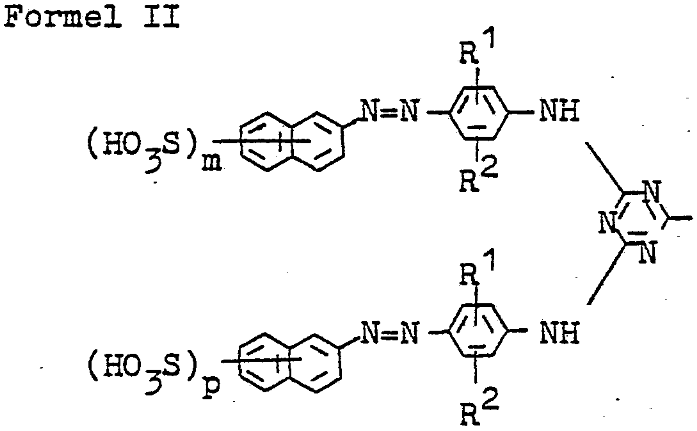

II

ersetzt sein kann.

Die Reste $R^3$ der Formel I können für n = 2 auch zu $-CH_2CH_2-$ vereint sein, wodurch der Rest der Formel

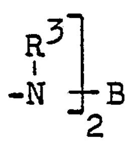

zu 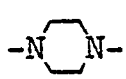 wird.

Einzelne Brückenglieder sind beispielsweise:
$-(CH_2)_2-$, $-(CH_2)_3-$.

Zur Herstellung der Verbindungen der Formel I kann man Verbindungen der Formel III

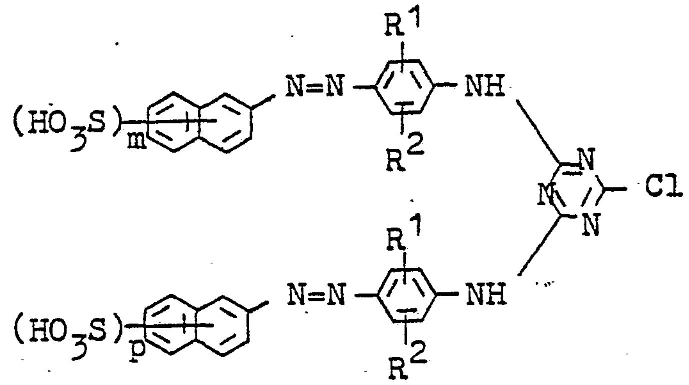 III

mit Verbindungen der Formel IV

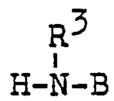 oder 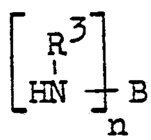

IV a IV b

umsetzen.

Einzelheiten der Herstellung können den Beispielen entnommen werden, in denen sich Angaben über Teile und Prozente, sofern nicht anders vermerkt, auf das Gewicht beziehen.

Je nach Wahl der Verbindungen der Formel IV und den Molverhältnissen der Reaktionspartner kann man Verbindungen der Formel I herstellen, die einen oder zwei oder mehrere Reste der Formel II enthalten, wenn in der Gruppierung X = NH das Wasserstoffatom durch den Rest der Formel II ersetzt ist.

Verbindungen mit mehreren oder vielen Resten der Formel II erhält man z. B., wenn man die Verbindungen der Formel III im entsprechenden Molverhältnis mit Polyaminen umsetzt.

Die Verbindungen der Formel I haben gelbe bis gelbbraune Nuancen und eignen sich insbesondere zum Färben von Papierstoffen, z. B. von ungeleimtem, 100 % gebleichtem Sulfitzellstoff. Neben den üblichen Gebrauchsechtheiten zeichnen sich die Farbstoffe der Anmeldung durch hohe Substantivität auf Papier und damit durch ein günstiges Abwasserverhalten aus, d. h. es befindet sich nach der Papierfärbung nur noch wenig des eingesetzten Farbstoffs im Abwasser; die Farbstoffe sind fernerhin gut in Wasser löslich. Neben ihrer pH-Unempfindlichkeit sind die Färbungen gut wasserecht.

Von besonderer technischer Bedeutung sind Verbindungen der Formel I, bei denen m und p 2 sind, $R^1$ Wasserstoff, Chlor oder Methyl, $R^2$ und $R^3$ Wasserstoff und n = 2 bedeuten und B die angegebene Bedeutung hat.

Ferner sind die Verbindungen bevorzugt, bei denen der Rest der Formel

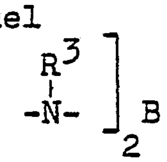 der

Formel

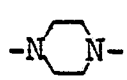

entspricht.

Von den Resten B sind solche bevorzugt, bei denen in der Formel

$$-(\text{alkylen-X})_r\text{-alkylen-}$$

r = 0 ist oder solche, bei denen r = q ist und X Sauerstoff oder gegebenenfalls durch einen Rest der Formel II substituiertes Imino ist.

Die Herstellung der Monochlortriazinfarbstoffe als Vorstufen für die beanspruchten neuen Farbstoffe erfolgt nach bekannten Verfahren, wie sie z.B. in der japanischen Patentveröffentlichung 9880/61, der DE-OS 1 544 425, der belgischen Patentschrift 703 224, der DDR-Patentschrift 60828 oder der DE-OS 2 555 533 beschrieben werden.

Beispiel 1

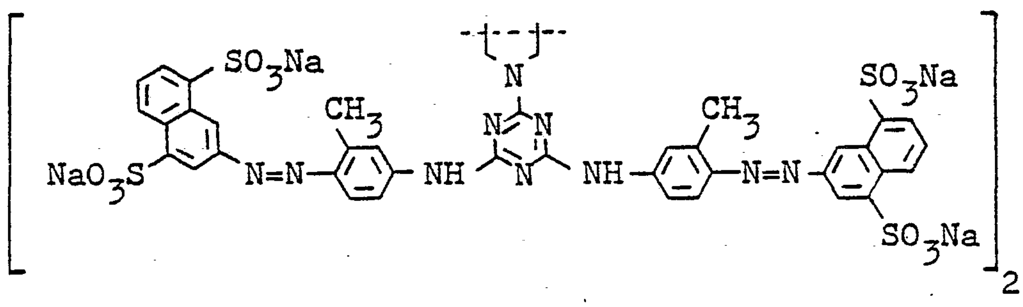

248 Teile 2-Aminonaphthalin-4,8-disulfosäure (48,9 %ig) werden bei pH 9 in 760 Teilen Wasser bei 50 °C bis 60 °C gelöst. Man stellt auf pH 7 und fügt bei 20 °C 82 Teile einer 34,5 %igen Natriumnitritlösung zu. Die erhaltene Lösung wird mit 500 Teilen Eis versetzt. Darauf werden 152 Teile einer 40 %igen Salzsäure eingestürzt, worauf die Temperatur sich auf + 3 °C einstellt. Nach ca. 10 Minuten beginnt das Diazoniumsalz auszufallen und die Temperatur steigt auf + 6 °C. Nach 2 Stunden Rühren wird der Nitritüberschuß mit 2 Teilen Amidosulfonsäure zerstört und in die Diazoniumsuspension eine Lösung aus 44 Teilen m-Toluidin in 200 Teilen Wasser und 38 Teilen einer 40 %igen Salzsäure gegeben. Innerhalb von ca. 30 Minuten tropft man 210 Teile einer 10 %igen Natronlauge zu. Der pH-Wert bleibt dann bei

3,0 stehen. Nach weiterer Zugabe von 80 Teilen 10 %iger Natronlauge sinkt der pH-Wert im Laufe von 2 Stunden auf 1,9 und der Farbstoff beginnt auszufallen. Mit weiteren 190 Teilen 10 %iger Natronlauge wird der pH-Wert auf 6,0 eingestellt, wobei sich der Farbstoff löst. Nach Zugabe von insgesamt 480 Teilen Kochsalz wird der Farbstoff über Nach ausgesalzen. Man saugt ab, wäscht mit etwa 10 %iger Kochsalzlösung nach und trocknet bei 80°C i. V. Man erhält 180 Teile salzhaltigen Farbstoff entsprechend 141,4 Teilen berechnet als salzfreie, trockene Säure (81,3 % d. Th.).

55,4 Teile des so erhaltenen Farbstoffs werden in 200 Teilen Wasser gelöst, auf + 2°C abgekühlt und mit einer Suspension von 18,5 Teilen Cyanurchlorid, 100 Teilen Eis, 50 Teilen Wasser und 0,2 Teilen des Natriumsalzes des Sulfobernsteinsäure-di-2-äthyl-hexyl-esters versetzt. Durch Zugabe von insgesamt 6 Teilen Natriumhydrogencarbonat bei einer Temperatur von 20°C bleibt der pH-Wert fast konstant auf ca. 6,1.

Anschließend fügt man noch einmal 55,4 Teile des oben genannten Farbstoffs in 200 Teilen Wasser zu und erwärmt auf ca. 70°C. Nach ca. 2 Stunden ist der zweite Chloraustausch beendet. der pH-Wert schwankt zwischen 6,0 und 6,8. Die Umsetzung läßt sich dünnschichtchromatographisch verfolgen.

Bei 70°C werden dann 4,3 Teile Piperazin in 30 Teilen Wasser gelöst zugefügt. Der pH-Wert steigt auf 7,9. Man rührt eine Stunden bei 90°C und hält durch Zugabe von Sodalösung den pH-Wert konstant. Durch weitere Zugabe von 1 Teil Piperazin in 10 Teilen Wasser und mehrstündiges Rühren bei 98°C wird die Umsetzung vervollständigt. Man läßt dann abkühlen, fügt bei 70°C 300 Teile Natriumchlorid zu und

rührt weiter bis zur Abkühlung auf Raumtemperatur. Nach Absaugen und Trocknen bei 80°C erhält man 147 Teile salzhaltigen Farbstoff mit einem Gehalt von 64,1 %. Der Farbstoff löst sich gut in kaltem Wasser und färbt Papiermasse in rotstichig gelben echten Tönen von hoher Substantivität.

Die in der folgenden Tabelle aufgeführten Farbstoffe lassen sich analog Beispiel 1 herstellen.

0017831

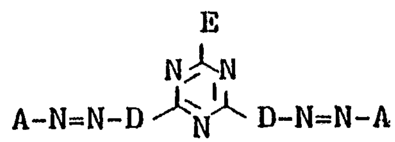

| Bsp. | A | D | E | Molverhältnis Farbstoff zu Amin | Farbton auf Papiermasse |
|---|---|---|---|---|---|
| 2 | 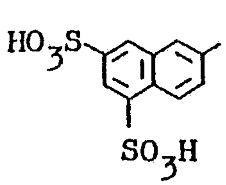 | 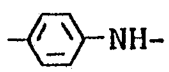 | 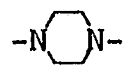 | 2 : 1 | gelb |
| 3 | 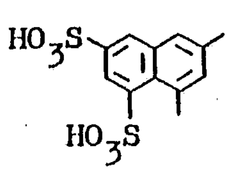 | 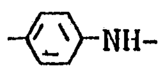 | 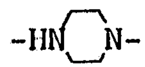 | 1 : 1 | gelb |
| 4 | 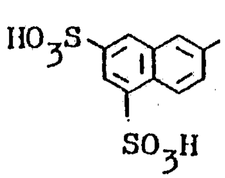 | 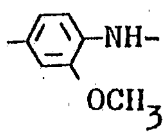 | $-NH-(CH_2)_2-NH-$ | 2 : 1 | gelb |

0017831

| Bsp. | A | D | E | Molverhältnis Farbstoff zu Amin | Farbton auf Papiermasse |
|---|---|---|---|---|---|
| 5 | 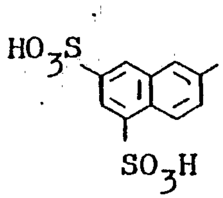 | 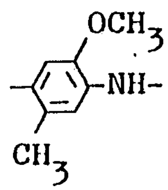 | $-NH-(CH_2)_2-NH-$ | 2 : 1 | gelb |
| 6 | 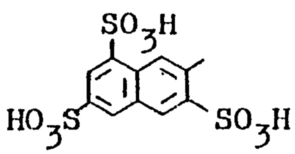 | 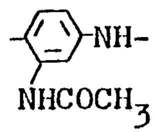 | " | 1 : 1 | gelb |
| 7 | " | 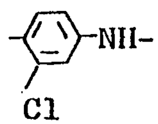 | " | 2 : 1 | gelb |
| 8 | 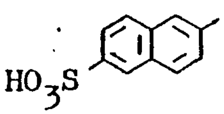 | 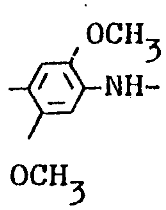 | " | 2 : 1 | gelb |

| Bsp. | A | D | E | Molverhältnis Farbstoff zu Amin | Farbton auf Papiermasse |
|---|---|---|---|---|---|
| 9 | 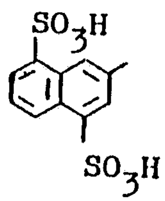 | 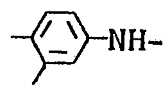 | $-NH-CH_2-CH-CH_3$<br>$\quad\quad\quad\quad\quad\; |$<br>$\quad\quad\quad\quad\; NH-$ | 2 : 1 | gelb |
| 10 | " | 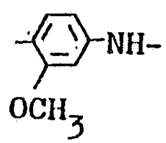 | $-HN-(CH_2)_3-NH-$ | 2 : 1 | gelb |
| 11 | 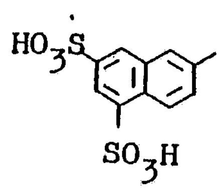 | 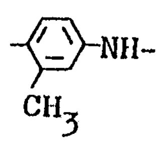 | $-H_2N-(CH_2)_3-NH-$ | 1 : 1 | gelb |
| 12 | " | 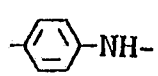 | $-N-(CH_2)_3-NH-$<br>$\;\; |$<br>$\; CH_3$ | 2 : 1 | gelb |

| Bsp. | A | D | E | Molverhältnis Farbstoff zu Amin | Farbton auf Papiermasse |
|---|---|---|---|---|---|
| 13 | 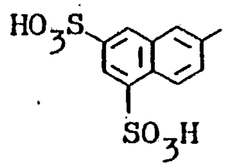 | 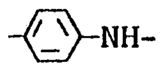 | 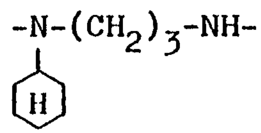 | 2 : 1 | gelb |
| 14 | 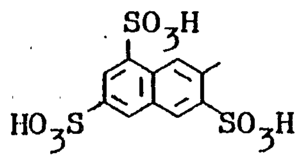 | 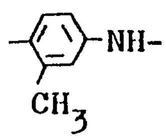 | 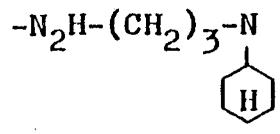 | 1 : 1 | gelb |
| 15 | " | 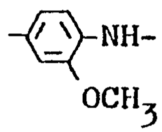 | $-HN-(CH_2)_5-NH-$ | 2 : 1 | gelb |
| 16 | 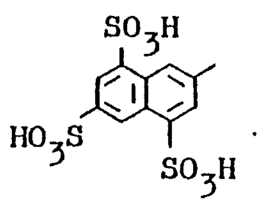 | 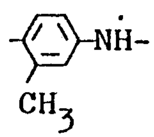 | $-HN-(CH_2)_6-NH-$ | 2 : 1 | gelb |

| Bsp. | A | D | E | Molverhältnis Farbstoff zu Amin | Farbton auf Papiermasse |
|---|---|---|---|---|---|
| 17 | 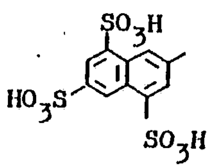 | 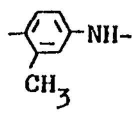 | $-HN-(CH_2)_3-O-(CH_2)_2-O-(CH_2)_3-NH-$ | 2 : 1 | gelb |
| 18 | 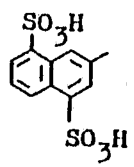 | 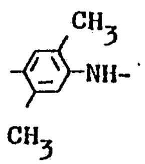 | $-HN-(CH_2)_3-O-(CH_2)_4-O-(CH_2)_3-NH-$ | 2 : 1 | gelb |
| 19 | " | 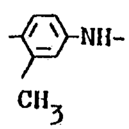 | $-HN-(CH_2)_3O(CH_2)_2-CH(CH_3)-(CH_2)_2O-(CH_2)_3-NH-$ | 2 : 1 | gelb |
| 20 | " | 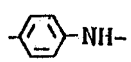 | $-HN-(CH_2)_2-N((CH_2)_2-NH_2)-$ | 2 : 1 | gelb |

| Bsp. | A | D | E | Molverhältnis Farbstoff zu Amin | Farbton auf Papiermasse |
|---|---|---|---|---|---|
| 21 | 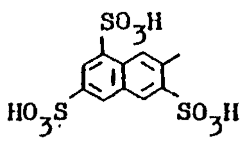 | 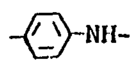 | $-HN-(CH_2)_2-N-$<br>$(CH_2)_3-NH_2$ | 2 : 1 | gelb |
| 22 | " | 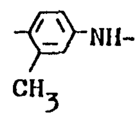 | $-HN-(CH_2)_3-N-$<br>$(CH_2)_3-NH_2$ | 2 : 1 | gelb |
| 23 | " | 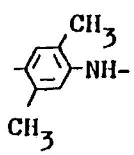 | $-H_2N-[(CH_2)_2N]-(CH_2)_2-NH-(CH_2)_2-NH_2$ | 2 : 1 | gelb |
| 24 | 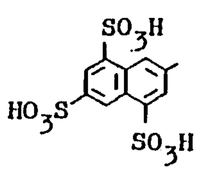 | 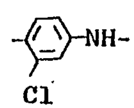 | $-HN-(CH_2)_3-N-(CH_2)_3-NH-$<br>$CH_3$ | 2 : 1 | gelb |

| Bsp. | A | D | E | Molverhältnis Farbstoff zu Amin | Farbton auf Papiermasse |
|---|---|---|---|---|---|
| 25 | 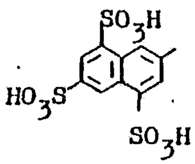 | 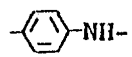 | 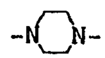 $-(CH_2)_2-NH-$ | 2 : 1 | gelb |
| 26 | " | 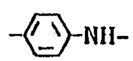 | 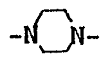 $-(CH_2)_2-NH_2$ | 1 : 1 | gelb |
| 27 | " | 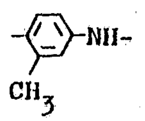 | 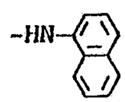 | 2 : 1 | gelb |
| 28 | 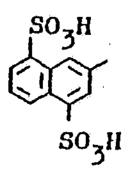 | 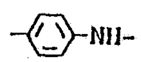 | $-NH-(CH_2-CH_2-NH)_2-C_2H_4-NH-$ | 2 : 1 | gelb |
| 29 | " | " | $-NH-(CH_2)_3-NH-(CH_2)_2-NH-(CH_2)_3-NH$ | 2 : 1 | gelb |

| Bsp. | A | D | E | Molverhältnis Farbstoff zu Amin | Farbton auf Papiermasse |
|---|---|---|---|---|---|
| 30 | 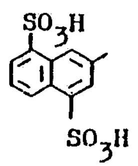 | 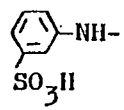 | $-NH-(CH_2)_6-N-$<br>$(CH_2)_6-NH_2$ | 2 : 1 | gelb |
| 31 | " | 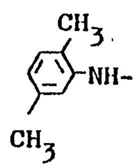 | $-NH-(CH_2)_3-NH-(CH_2)_3-N-$<br>$(CH_2)_3-NH_2$ | 2 : 1 | gelb |
| 32 | 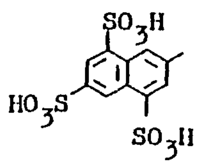 | 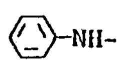 | $-NH-(CH_2)_3-NH-(CH_2)_3-N-$<br>$H_2N-(CH_2)_3-NH$ | 2 : 1 | gelb |
| 33 | " | " | $-NH-(CH_2)_2-N-$<br>$C_2H_4OH$ | 2 : 1 | gelb |

| Bsp. | A | D | E | Molverhältnis Farbstoff zu Amin | Farbton auf Papiermasse |
|---|---|---|---|---|---|
| 34 | 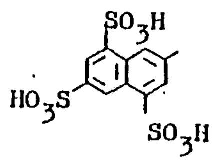 | 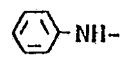 | 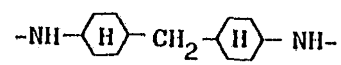 | 2 : 1 | gelb |
| 35 | 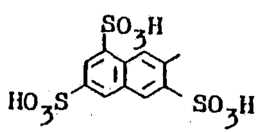 | 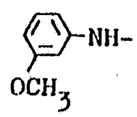 | 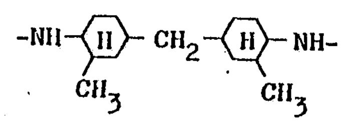 | 1 : 1 | gelb |
| 36 | " | 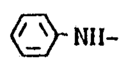 | 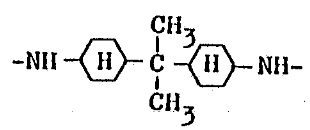 | 2 : 1 | gelb |
| 37 | " | 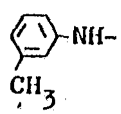 | 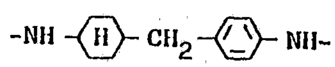 | 2 : 1 | gelb |
| 38 | " | " | 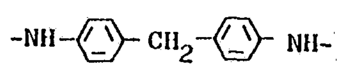 | 2 : 1 | gelb |

0017831

| Bsp. | A | D | E | Molverhältnis Farbstoff zu Amin | Farbton auf Papiermasse |
|---|---|---|---|---|---|
| 39 | 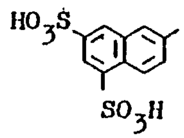 | 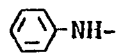 | 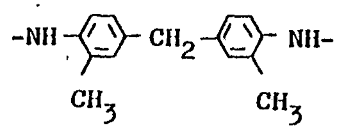 | 2 : 1 | gelb |
| 40 | " | " | 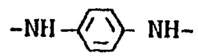 | 2 : 1 | gelb |
| 41 | " | 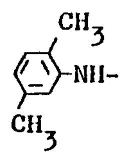 | 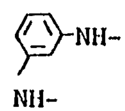 | 2 : 1 | gelb |
| 42 | 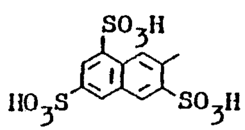 | 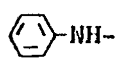 | 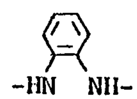 | 2 : 1 | gelb |
| 43 | " | " | 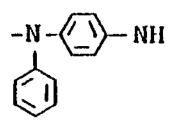 | 2 : 1 | gelb |

| Bsp. | A | D | E | Molverhältnis Farbstoff zu Amin | Farbton auf Papiermasse |
|---|---|---|---|---|---|
| 44 | 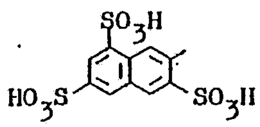 | 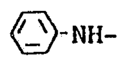 | 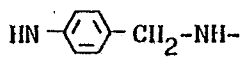 | 1 : 1 | gelb |
| 45 | " | " | 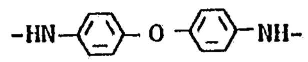 | 2 : 1 | gelb |
| 46 | " | " | 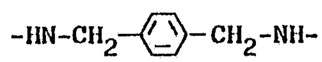 | 2 : 1 | gelb |
| 47 | 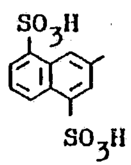 | " | -HN-NH- | 2 : 1 | gelb |
| 48 | " | " | " | 1 : 1 | gelb |

| Bsp. | A | D | E | Molverhältnis Farbstoff zu Amin | Farbton auf Papiermasse |
|---|---|---|---|---|---|
| 49 | 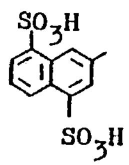 | 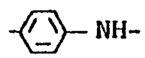 | 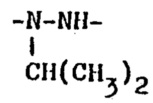 | 2 : 1 | gelb |
| 50 | " | " | 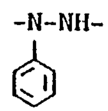 | 2 : 1 | gelb |
| 51 | " | " | 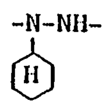 | 2 : 1 | gelb |
| 52 | " | " | " | 1 : 1 | gelb |

| Bsp. | A | D | E | Molverhältnis Farbstoff zu Amin | Farbton auf Papiermasse |
|---|---|---|---|---|---|
| 53 | 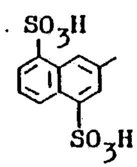 | 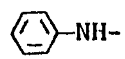-NH- | $-HN-(C_2H_4NH)_n-C_2H_4-NH-$<br>n = 1, 2, 3, 4, 5<br>gemisch mit<br>$(NH-C_2H_4)_n-N{<}^{CH_2-CH_2}_{CH_2-CH_2}{>}N-(C_2H_4NH)_m-$<br>n = 1, 2, 3, 4<br>m = 0, 1, 2, 3<br>$m + n \leq 6$ | 2 : 1 | gelb |
| 54 | " | " | Polyäthylenimin | 2 : 1 | gelb |
| 55 | " | " | " | 1 : 1 | gelb |
| 56 | " | " | $-HN-(CH_2)_2-N(CH_3)_2$ | ; : 1 | gelb |

| Bsp. | A | D | E | Molverhältnis Farbstoff zu Amin | Farbton auf Papiermasse |
|---|---|---|---|---|---|
| 57 | 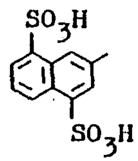 | 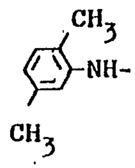 | $-HN-(CH_2)_2-N(C_2H_5)_2$ | 1 : 1 | gelb |
| 58 | " | 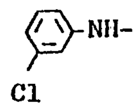 | $-HN-(CH_2)_3-N(CH_3)_2$ | 1 : 1 | gelb |
| 59 | " | 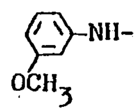 | $-HN-(CH_2)_3-N(C_2H_5)_2$ | 1 : 1 | gelb |
| 60 | " | 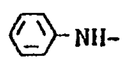 | $-HN-(CH_2)_4-N(C_2H_5)_2$ | 1 : 1 | gelb |
| 61 | " | " | $-HN-\underset{CH_3}{CH}-(CH_2)_3-N(C_2H_5)_2$ | 1 : 1 | gelb |

| Bsp. | A | D | E | Molverhältnis Farbstoff zu Amin | Farbton auf Papiermasse |
|---|---|---|---|---|---|
| 62 | 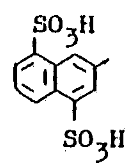 | 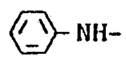 | 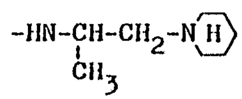 | 1 : 1 | gelb |
| 63 | 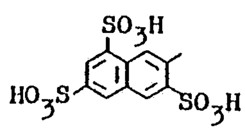 | " | 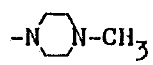 | 1 : 1 | gelb |
| 64 | " | " | 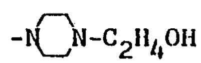 | 1 : 1 | gelb |
| 65 | " | " | 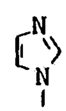 | 1 : 1 | gelb |

| Bsp. | A | D | E | Molverhältnis Farbstoff zu Amin | Farbton auf Papiermasse |
|---|---|---|---|---|---|
| 66 | 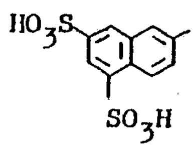 | 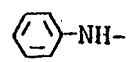 | 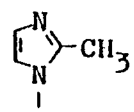 | 1 : 1 | gelb |
| 67 | " | " | 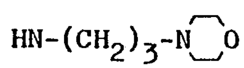 | 1 : 1 | gelb |

Patentansprüche

1. Organische Verbindungen, die in Form der freien Säuren der allgemeinen Formel I

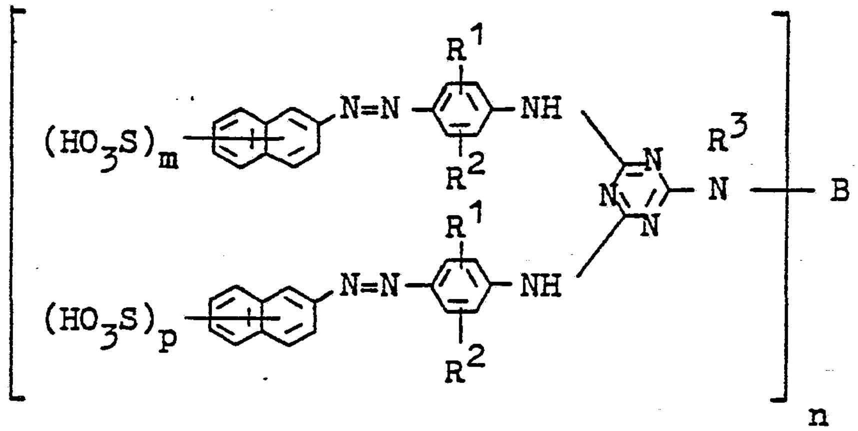

entsprechen, in der

m die Zahlen 1, 2 oder 3,

p die Zahlen 1, 2 oder 3,

n die Zahlen 1 oder 2, die Reste

$R^1$ unabhängig voneinander Wasserstoff, Chlor, Alkyl, Alkoxy, Alkanoylamino oder Aminocarbonylamino, die Reste

$R^2$ unabhängig voneinader Wasserstoff, Alkyl oder Alkoxy,

$R^3$ Wasserstoff oder gegebenenfalls substituiertes Alkyl und

B für n = 1 gegebenenfalls substituiertes Aminoalkyl oder gegebenenfalls substituiertes Amino und für n = 2 ein Brückenglied und

$R^3$ und B für n = 1 zusammen mit dem Stickstoff einen Heterocyclus bedeuten.

2. Verbindungen gemäß Anspruch 1, bei denen m und p 2 sind, $R^1$ Wasserstoff, Chlor oder Methyl, $R^2$ und $R^3$ Wasserstoff und n = 2 bedeuten und B die angegebene Bedeutung hat.

3. Verwendung der Verbindungen gemäß Anspruch 1 zum Färben von Papier.

Europäisches Patentamt

0017831

Nummer der Anmeldung
EP 80 10 1699

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | FR - A - 2 295 089 (SANDOZ)<br>* Seite 1 ganz; Seite 10, Zeilen 1,2; Seiten 11-15; Beispiele 1-60 *<br>-- | 1-3 | C 09 B 43/16<br>D 21 H 1/46<br>3/80 |
| | CHEMICAL ABSTRACTS, Band 85, Nr. 8, 23. August 1976, Zusammenfassung Nr. 48263v, Seite 87, Columbus, Ohio, US,<br>& JP - A - 76 50326 (NIPPON KAKAKU CO. LTD.)(01-05-1976)<br>* Zusammenfassung *<br>-- | 1,2 | **RECHERCHIERTE SACHGEBIETE (Int. Cl. 3)** |
| | FR - A - 1 441 174 (CASSELLA)<br>* Seite 1 ganz; Seiten 3,4; Tabelle; Beispiele 13-23,34 *<br>---- | 1,2 | C 09 B 43/00<br>43/12<br>43/16 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 17-07-1980 | GREEN |